# EUROPEAN PATENT APPLICATION

(11) **EP 4 007 248 A1**
(43) Date of publication of application: **01.06.2022**
(21) Application number: 20210717.3
(22) Date of filing: 30.11.2020
(51) Int. Cl.: H04M 3/51

(54) **COMPUTER-IMPLEMENTED METHOD OF PROCESSING AN EMERGENCY INCIDENT AND EMERGENCY COMMUNICATION NETWORK**

(71) Applicant: Unify Patente GmbH & Co. KG, 81739 München (DE)
(72) Inventor: Tsiatsikas, Zisis, 54352 AnoToumpa Thessaloniki (GR); Anagnostou, Sofia, 14671 Nea Erythrea Athens (GR)
(74) Representative: Schaafhausen Patentanwälte PartGmbB

(57) **Abstract**

The present invention relates to a computer-implemented method of processing an emergency incident reported to a Public Safety Answering Point PSAP (3) by at least a first and a second emergency callers (5, 5') via an emergency communication network (1), the method comprising the steps of: receiving, at the PSAP (3), a first emergency call initiated by a first emergency caller (5) for reporting an emergency incident; processing the first emergency call by a call taker (4) at the PSAP (3) as an active call; comparing content of the first emergency call with content posted on social media for verifying whether there is matching content referring to the emergency incident, wherein the non-matching content is stored in a database of the PSAP (3); receiving, at the PSAP (3), a second emergency call initiated by a second emergency caller (5') for reporting an emergency incident, wherein the second emergency call is put in a call queue; comparing content of the second emergency call to content of the first emergency call, and if the content of the first and second emergency call matches, prioritizing the second emergency call in the call queue, and if the content of the first and second emergency call does not match, comparing the content of the second emergency call with the non-matching content retrieved from social media.

## Description

The present invention relates to a computer-implemented method of processing an emergency incident and a corresponding emergency communication network.

If a major emergency event occurs, as for example, a severe fire or a flooding or the like, there usually are many people who report the emergency to a respective public-safety answering point (PSAP), which basically is a call center that handles emergency calls initiated by mobile devices or landline phones. However, as many emergency calls are received within a short period of time, a well-known problem in call centers or PSAPs is related to call queueing, since it is not possible to respond to all incoming calls by the responsible agents at a PSAP at the same time.

Consequently, many of the incoming emergency callers may be waiting in the queue for a long time. However, these minutes might be crucial for the emergency caller who is put on hold in the queue to receive a useful response from the emergency service. At the same time, this period is also crucial for the active ongoing emergency calls at the PSAP. In any case, all the calls need to be handled as fast and as soon as possible.

In prior art, there are known different solutions for accelerating the handling of emergency calls which exploit media retrieved from other sources, for example, the social media, with the aim to assist the call taker at the PSAP who deals with the incoming calls, and thus, to accelerate the service time with respect to the active emergency calls.

Nevertheless, a source of information which is very useful and which is very crucial for the handling of an emergency call pertains to the queued calls, because the callers may provide useful pieces of information with respect to an emergency event. However, in a case where during a severe emergency incident a large number of calls are received at the PSAP and all call takers are currently occupied, nobody is able to take care of the incoming emergency calls immediately. Thus, the emergency caller is put on hold, and a recorded message will be played to the caller, announcing to the caller that the call is very important and it will be served in X minutes. However, the information that might be provided by the emergency callers that are waiting in the queue and that might be essential for handling the emergency incident is not available at that point of time.

Therefore, the present invention is based on the object to provide a computer-implemented method of processing an emergency incident and a corresponding emergency communication network for overcoming the above mentioned problem processing a multitude of incoming emergency calls in a more efficient manner.

This object is solved according to the present invention by a method of processing an emergency incident having the features according to claim 1, and a corresponding emergency communication network having the features according to claim 9. Preferred embodiments of the invention are specified in the respective dependent claims.

Thus, according to the present invention, a computer-implemented method of processing an emergency incident reported to a Public Safety Answering Point PSAP by at least a first and a second emergency caller via an emergency communication network is provided, the method comprising the steps of:
- receiving, at the PSAP, a first emergency call initiated by a first emergency caller for reporting an emergency incident;
- processing the first emergency call by a call taker at the PSAP as an active call;
- comparing content of the first emergency call with content posted on social media for verifying whether there is matching content referring to the emergency incident, wherein the non-matching content is stored in a database of the PSAP;
- receiving, at the PSAP, a second emergency call initiated by a second emergency caller for reporting an emergency incident, wherein the second emergency call is put in a call queue;
- comparing content of the second emergency call to content of the first emergency call, and if the content of the first and second emergency call matches, prioritizing the second emergency call in the call queue, and if the content of the first and second emergency call does not match, comparing the content of the second emergency call with the non-matching content retrieved from social media.

By the inventive method, it is possible to verify whether there is valuable content in emergency calls that cannot be processed immediately due to a call overload, and to handle the emergency incident more efficiently.

According to a preferred embodiment of the invention, if the content of the second call matches pieces of data of the non-matching content, the method further comprises a step of presenting the content of the second call to the call taker at the PSAP.

According to a further preferred embodiment of the invention, if the content of the second call matches pieces of data of the non-matching content, the method further comprises a step of establishing a call conference and adding the second call and the active call to the conference.

Also, the method may further comprise a step of determining the geolocation of the first emergency caller and/or of the second emergency caller.

Preferably, the method further comprises a step of comparing the geolocation of the first emergency caller to the geolocation of the second emergency caller.

According to still a further preferred embodiment of the invention, the content posted on social media is content that refers to the geolocation of the first emergency caller and/or the second emergency caller.

According to still another preferred embodiment of the invention, the content of the first and second emergency calls and the content of social media comprises photos and videos.

Preferably, machine learning is used for the content comparing steps.

Moreover, according to the present invention, an emergency communication network is provided comprising at least one PSAP, wherein the PSAP is adapted for carrying out the method of processing an emergency incident.

The invention and embodiments thereof will be described below in further detail in connection with the drawing.
- Fig. 1: shows a schematic overview of an emergency communication network according to prior art;
- Fig. 2: schematically illustrates a scenario for handling an emergency incident according to an embodiment of the invention;
- Fig. 3: is a flow chart illustrating the steps of the method for handling an emergency incident according to an embodiment of the invention;
- Fig. 4: illustrates an end-to-end scenario for handling an emergency incident according to an embodiment of the invention; and
- Fig. 5: illustrates an end-to-end scenario for handling an emergency incident according to another embodiment of the invention.

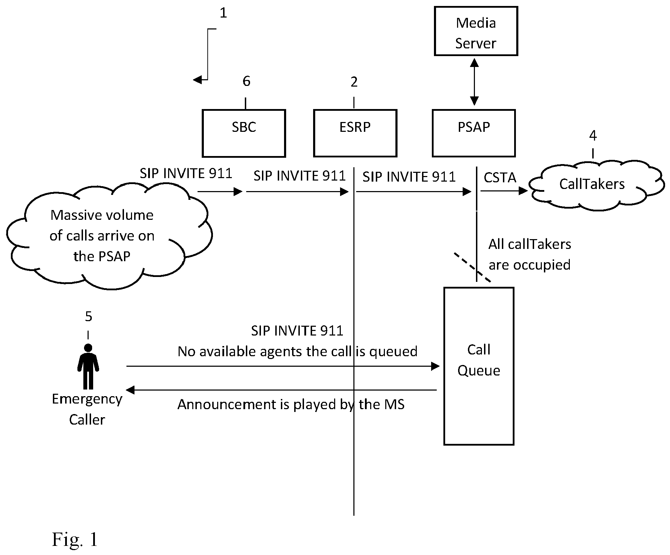

Fig. 1 shows a schematic overview of an emergency communication network 1 according to prior art which comprises an Emergency Service Routing Proxy, ESRP, 2 and PSAP 3. At the PSAP 3 side, one or more call taker/takers 4, as for example, a first responder is present for handling and organizing emergency events that are reported via the emergency communication network 1 for example, by one or more emergency caller/callers 5 who may report an emergency incident by dialing 911 - or any other appropriate telephone number for emergency services.

The call may be a SIP call that is transmitted via a Session Boarder Controller, SBC, 6 to the ESRP 2 and there, it is routed to the next or most appropriate PSAP 3, where a call taker 4 receives the emergency call and handles the emergency event, for example, by informing the responsible police station or fire department or the like.

However, if there are a lot of incoming emergency calls reported by various emergency callers 5, the calls will be put on hold, and the emergency callers 5 will be waiting in the queue, and thus, will not be able to provide possibly very important information on the emergency incident to the call taker 4 immediately.

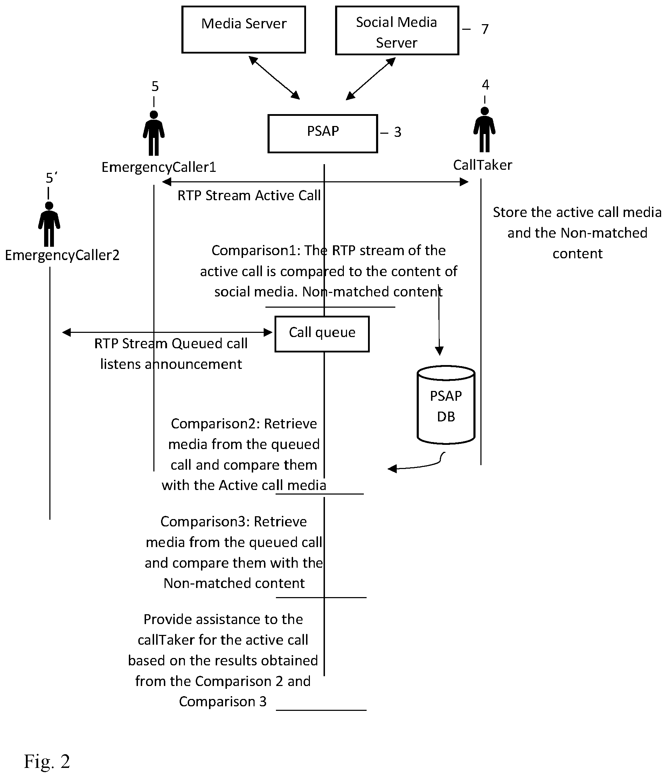

Fig. 2 schematically illustrates a scenario for handling an emergency incident according to an embodiment of the invention. According to the illustrated scenario, it is assumed that a call taker 4 at a PSAP 3 has already received an emergency call from a first emergency caller 5 that is already being handled and processed by the call taker 4, in the following this is referred to as an "active call". The RTP stream of the active call is compared to content of social media for verifying whether there is matching content to the content of the RTP stream of the active call. If no matching content that has been uploaded on a social media server 7 with respect to the emergency event that is also handled in the active call is found, then a second comparison is made. Namely, as one or more further emergency calls is/are received, for example, a second emergency call initiated by a second emergency caller 5' that may not be responded to by the call taker 4 who already is handling the active call immediately, this or these further call/calls are queued. However, the content (e.g., photos or videos of the emergency scene or location) of the RTP streams of the queued call or calls is compared to the content of the active call so as to verify whether they refer to the same emergency event. If content of a queued call matches content of the active call, then this queued call is prioritized so as to further assist the call taker 4 who is already handling the same emergency incident in the active call.

Further, a third comparison is made according to which content of the queued call or calls is compared to the content of social media that did not match content of the active call. Namely, if the ongoing active emergency calls have been compared to the content of social media, but there is no match, the content of the social media that has not matched is stored. However, this content is not useless because it may be correlated to the content of the queued emergency calls. This may provide useful information in cases where the active emergency call does not carry media content at all, or if the media content of the active call and the queued call refers to different views of the same incident. In this respect different views means for example pictures or videos taken from different perspectives. In any case, the correlation of the geolocation is crucial to assure that there is correlation to the same event.

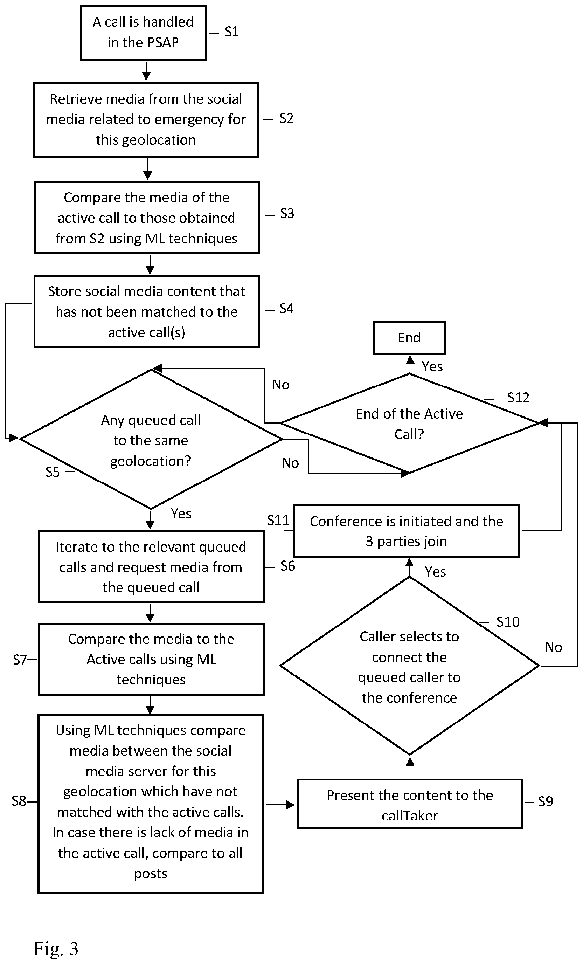

Fig. 3 is a flow chart illustrating the steps of the method for handling an emergency incident according to an embodiment of the invention. In a first step S1, an emergency call is received and handled at the PSAP, namely, an agent or call taker responsible for the PSAP answers the emergency call and takes the necessary steps, as for example, informing the responsible police station or fire department and the like. In the next step S2, the PSAP retrieves content from the social media server, with the aim to assist the call taker with the active ongoing call. In the next step S3, the PSAP compares the media retrieved from the active call to the content obtained from the social media server using, for example, Machine Learning, ML, techniques that will be described in further detail below. In step S4, the retrieved content from the social media server that has not matched the media of the active call, i.e., there is only low or no similarity at all, is stored in the PSAP database. After that, in the next step S5, it is verified if there are other calls from the same geolocation as the active call that are currently waiting in the call queue. In case other calls do exist in the queue for the same geolocation, in step S6, the media (photos or videos or the like) is requested from the queued calls. In step S7, the content retrieved in the previous step S6 is compared to the content retrieved from the active calls using, for example, ML techniques. In step S8, the media of the queued call is also compared to the pieces of data that have been stored in the PSAP database in step S4. In the next step S9, the content retrieved in steps S7 and S8 is presented to the call taker. In the next step S10, if the call taker decides that the queued emergency caller is a vital source of information for assistance with respect to the active emergency call, the call taker may add him or her to the conference (the ongoing active call). Thus, in step S11, a conference instance is initiated and the three parties join the conference. That is, the emergency caller of the active call, the call taker, and the emergency caller from the queued call will all join the conference. Finally, in step S12, a check is performed, whether the active call is still ongoing.

In the following, the ML-driven media comparison is described. As mentioned above, the comparison between the RTP stream and the videos or images may be done using ML-based frameworks. Such comparisons can be accomplished with the frameworks as described, for example, in Karpathy A., Toderici G., Shetty S., Leung T., Sukthankar R. & Fei-Fei L. (2014): Large-scale video classification with convolutional neural networks, IN: Proceedings of the IEEE conference on Computer Vision and Pattern Recognition, pages 1725 - 1732, as well as in the Internet, for example, on youtube at https://www.youtube.com/watch?v=LAV56E-mWoo, or at https://www.youtube.com/watch?v=qrzQ_AB1DZk. Further information as to the ML methods used may also be found in the Chinese patent CN101433072B and at https://www.pyimagesearch.com/2019/07/15/video-classification-with-keras-and-deep-learning/. Namely, the frameworks presented in the above mentioned citations presents the exploitation of Convolutional neural network for providing a solution to the video classification problem. In the proposed architecture, the authors exploit two streams for processing, over two spatial resolutions. The first stream is devoted to the modeling of low-resolution image, while the second one processes high-resolution center crop. Both streams consist of alternating convolution (red), normalization (green) and pooling (blue) layers. Both streams converge to two fully connected layers (yellow) Moreover, they use the Downpour Stochastic Gradient Descent in order to optimize their models acrross a computing cluster. Finally, in their architecture they also include an image preprocessing step for each one of the frames.

The framework presented at https://www.pyimagesearch.com/2019/07/15/video-classification-with-keras-and-deep-learning/ relates to Keras library. This library is open-source and it enables the experimentation with deep learning. What is achieved using this framework is that the solution loops over all the frames of a video. These frames are fed into a Convolutional neural network and a prediction is generated. During this process, a list of the last K predictions is stored. Additionally, the average value of these predictions is computed. The label which corresponds to the one that matches the current frame average with the highest probability is selected.

Referring to the figure again, as to the content retrieved from the social media that has not matched an emergency event of an active call, it is noted that this data may be used as outlined below. In case of an emergency incident, two users may be located within the vicinity of the location of the emergency incident, for example, within a radius of x meters. Then, if it is assumed that the media of the ongoing active emergency call will not match the retrieved content (i.e., images, videos) from the social media, then most probably the retrieved content will not have any value for the current ongoing active emergency call and thus it might be ignored. Nevertheless, these pieces of data that would otherwise be ignored, may still be valuable. Namely, even if the retrieved media has not matched the media of the ongoing active emergency call, a match may be successful with respect to the content of the queued calls which may refer to an emergency in the vicinity of interest (i.e., within a radius of x meters).

Thus, the call taker may be provided with information as to the ongoing active emergency call by exploiting the media of the queued calls. Additionally, pieces of data (i.e., content retrieved from the social media server that has not matched the content of the ongoing active calls) can be used and exploited that otherwise would be ignored.

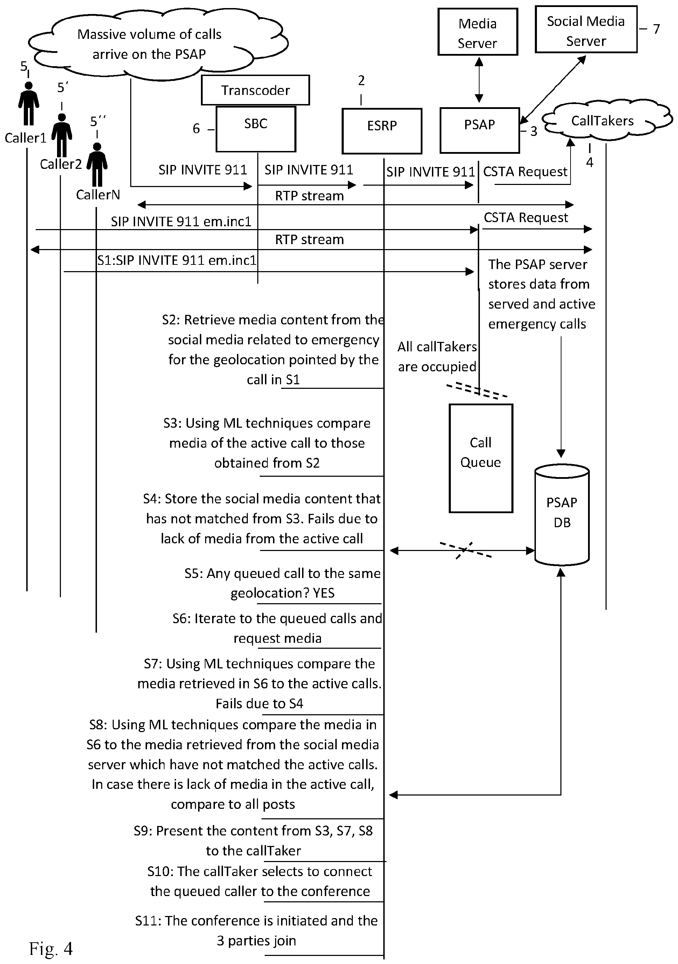

Fig. 4 illustrates an end-to-end scenario for handling an emergency incident according to an embodiment of the invention. In this scenario, an active emergency call that does not contain any media (i.e., videos and images) is received at the PSAP 3 at a point of time t0. The queued call(s) within the vicinity of the location of the active call (within a radius x), are received at the PSAP 3 at a later point of time t1, and at the same time these calls comprise emergency content (e.g., images, videos) that matches the content of the social media. The queued call media are returned in order to assist the call taker 4 to handle the active ongoing emergency call(s).

Here, the queued emergency calls convey media i.e., images and/or videos which match the content i.e., images and videos of social media with respect to the same geolocation. The queued call media content is returned back to the call taker in order to assist him or her and enrich the emergency incident preview and presentation in order to handle the ongoing active emergency call.

Namely, in the first step a call arrives at the PSAP and it is forwarded to a call taker 4 or PSAP agent. In the second step, data related to emergency incidents for a specific geolocation is retrieved from the social media server. In the following step the media (i.e., images and/or videos) retrieved from the social media server is compared to the stream of the ongoing active call. However, there is no match because the ongoing active examined emergency call does not contain media. In step 5, a check is performed whether queued calls from the same vicinity do exist in the call queue. In the next step, an iteration is performed and media is requested from the queued calls. In step 7, the comparison fails in the same way as in step 4 due to lack of media from the active call. In step 8, a comparison is performed for the media of the queued calls to the media retrieved from social media for the same vicinity of the ongoing active emergency call. In step 9, the content of the comparisons of step 3, step 7, and step 8 is presented in the call taker. In the following step, the call taker selects to add the queued emergency call to the conference. In the last step, the conference room is set up and the three parties join in.

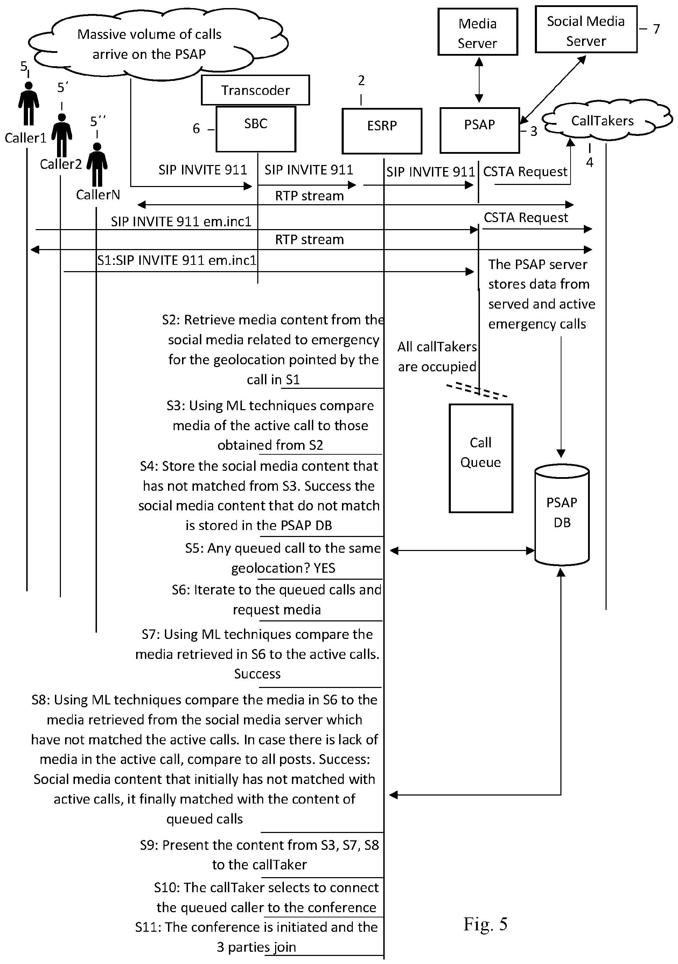

Fig. 5 illustrates an end-to-end scenario for handling an emergency incident according to another embodiment of the invention. Here, an active emergency call which contains media (i.e., videos and images) arrives on the PSAP 3 at a point of time t0. The ongoing active emergency call media partially match the content of the social media. Thus, the social media content that has not matched is stored in the database of the PSAP 3. The queued call(s) within the vicinity of the same geolocation as the active one (within a radius x) arrive at the PSAP 3 at a later point of time t1, and these calls comprise emergency content (e.g., images, videos) that matches the content of the social media. The queued call media are returned back in order to assist the call taker to handle the active ongoing emergency call(s).

Basically, the embodiment described with respect to Fig. 5 is similar to the one of Fig. 4, however, there is a major difference as to the fact that the ongoing active emergency call comprises media content which partially matches the content retrieved from the social media server. Thus, in step 4, the content that has not matched the content of the ongoing active emergency calls is stored in the database of the PSAP 3. Furthermore, in step 7, the content of the queued calls matches the content of the ongoing active emergency calls. Finally, in step 8, a comparison is performed between the retrieved content that has not matched the ongoing active emergency call and the content of the queued calls. As here, a successful match is found, in step 9, the call taker is presented with much more pieces of data that assist him or her in handling the emergency incident.

### Reference numerals

- 1: Emergency communication network
- 2: ESRP
- 3: PSAP
- 4: Call taker
- 5, 5': Emergency caller
- 6: SBC
- 7: Social media server

## Claims

1. Computer-implemented method of processing an emergency incident reported to a Public Safety Answering Point PSAP (3) by at least a first and a second emergency callers (5, 5') via an emergency communication network (1), the method comprising the steps of:
- receiving, at the PSAP (3), a first emergency call initiated by a first emergency caller (5) for reporting an emergency incident;
- processing the first emergency call by a call taker (4) at the PSAP (3) as an active call;
- comparing content of the first emergency call with content posted on social media for verifying whether there is matching content referring to the emergency incident, wherein the non-matching content is stored in a database of the PSAP (3);
- receiving, at the PSAP (3), a second emergency call initiated by a second emergency caller (5') for reporting an emergency incident, wherein the second emergency call is put in a call queue;
- comparing content of the second emergency call to content of the first emergency call, and if the content of the first and second emergency call matches, prioritizing the second emergency call in the call queue, and if the content of the first and second emergency call does not match, comparing the content of the second emergency call with the non-matching content retrieved from social media.

2. Computer-implemented method according to claim 1, wherein, if the content of the second call matches pieces of data of the non-matching content, the method further comprises a step of presenting the content of the second call to the call taker (4) at the PSAP (3).

3. Computer-implemented method according to claim 1 or claim 2, wherein, if the content of the second call matches pieces of data of the non-matching content, the method further comprises a step of establishing a call conference and adding the second call and the active call to the conference.

4. Computer-implemented method according to any one of the preceding claims, wherein the method further comprises a step of determining the geolocation of the first emergency caller (5) and/or of the second emergency caller (5').

5. Computer-implemented method according to claim 4, wherein the method further comprises a step of comparing the geolocation of the first emergency caller (5) to the geolocation of the second emergency caller (5').

6. Computer-implemented method according to claim 5, wherein the content posted on social media is content that refers to the geolocation of the first emergency caller (5) and/or the second emergency caller (5').

7. Computer-implemented method according to any one of the preceding claims, wherein the content of the first and second emergency calls and the content of social media comprises photos and videos.

8. Computer-implemented method according to any one of the preceding claims, wherein machine learning is used for the content comparing steps.

9. Emergency communication network, comprising at least one PSAP (3), wherein the PSAP (3) is adapted for carrying out the method of processing an emergency incident according to any one of the preceding claims.
